# FASCICULE DE BREVET EUROPEEN

(11) **EP 2 364 598 B1**
(45) Date de publication et mention de la délivrance du brevet: **16.11.2016**
(21) Numéro de dépôt: 11158166.6
(22) Date de dépôt: 14.03.2011
(51) Int. Cl.: A22C 29/04, A23L 17/50

(54) **Procédé de transformation de fruits de mer à haute pression**
Hochdruckumwandlungsverfahren von Meeresfrüchten
High-pressure seafood processing method

(30) Priorité: 12.03.2010 FR 1000994
(43) Date de publication de la demande: 14.09.2011
(73) Titulaire: Cinq Degres Ouest, 29340 Riec-sur-Belon (FR)
(72) Inventeur: Tauge, Alexis, 56950 Crach (FR)
(74) Mandataire: Ermeneux, Bertrand

(56) Documents cités:
- GB-A- 2 430 857
- JP-A- 4 356 156
- US-A- 2 824 005
- US-A1- 2002 009 534
- US-B1- 6 537 601
- KENNETH S. HILDERBRAND, JR.: "Preparation of Salt Brines for the Fishing Industry", , [Online] mars 1999 (1999-03), page 4PP, XP002609727, OREGON SEA GRANT - OREGON STATE UNIVERSITY Extrait de l'Internet: URL:http://seagrant.oregonstate.edu/sgpubs /onlinepubs/h99002.pdf> [extrait le 2010-11-16]

## Description

### 1. Domaine de l'invention

Le domaine de l'invention est celui du traitement des fruits de mer et des poissons.

Plus précisément, l'invention concerne un procédé de transformation, ou en d'autres termes de préparation, des fruits de mer vivants tels que des crustacés, des coquillages, notamment du genre bivalves, des calmars et des poissons crus.

### 2. Etat de la technique

Il est généralement admis qu'ouvrir des coquillages à l'aide d'un outil, tel qu'un couteau, requiert de la force et de l'habileté.

L'industrie de transformation des coquillages, et les restaurants qui servent des fruits de mer, ont donc des besoins importants en personnels compétents dans l'ouverture des coquillages. On estime ainsi, par exemple, que la main d'oeuvre représente jusqu'à 80% du coût de revient d'une huitre ouverte servie en demi-coquille dans un restaurant.

On constate également que la patience nécessaire pour décortiquer un crustacé pousse les consommateurs à se reporter sur des produits consommables plus rapidement.

Il existe donc une demande pour des techniques permettant de faciliter l'ouverture des coquillages et le décorticage des crustacés.

On a ainsi proposé d'exposer des coquillages, et par exemple des huitres, à des pressions hydrostatiques supérieures à 2000 bars pour provoquer l'ouverture de leur coquille.

À cet effet, selon une technique d'ouverture connue, on place, pendant une durée déterminée, un lot de coquillages contenus dans un sac étanche à l'intérieur d'une enceinte d'une unité de pressage à très hautes pressions hydrostatiques, disponible par exemple auprès de la société Nc Hyperbaric (marque déposée) ou de la société Avure (marque déposée).

Un inconvénient de cette technique d'ouverture est que la texture, l'aspect, l'odeur, la couleur et/ou la sapidité du coquillage peuvent être altérés, par exemple si le coquillage est exposé à des pressions excessives.

Un autre inconvénient de cette technique d'ouverture est qu'il est nécessaire d'exposer le coquillage pendant une durée suffisante, et généralement de l'ordre d'une minute ou plus, pour que la coquille s'ouvre, ce qui limite la quantité de coquillages pouvant être traités avec une même unité de pressage à très hautes pressions hydrostatiques.

Cet inconvénient est d'autant plus pénalisant que les unités de pressage à très hautes pressions hydrostatiques sont onéreuses à l'achat.

D'autre part, les durées nécessaires pour pressuriser puis dépressuriser l'enceinte augmentent significativement le temps de traitement d'un lot de coquillage. C'est pourquoi, on a cherché à réduire au mieux ces durées, et notamment la durée de dépressurisation. Le document US 6,537,601 propose par exemple une vitesse de dépressurisation d'environ 2000 bars en 10 secondes.

Les coquillages peuvent être conditionnés en vrac dans un sac contenant un bain d'une solution liquide, par exemple de l'eau du réseau. Un inconvénient de ce choix technique réside dans le fait que la composition, et notamment la salinité, de l'eau contenue dans la coquille de l'huitre, peut être modifiée par la solution dans laquelle les huitres sont immergées, ou par le fluide utilisé dans l'unité de pressage pour pressurer le sac, si le sac perce.

Afin de remédier à cet inconvénient, on a proposé de disposer les coquillages en nappe dans le sac, et de faire le vide à l'intérieur du sac. Cette technique présente cependant l'inconvénient d'augmenter les coûts de conditionnement.

On connait également des documents CA-2548237 et US-2009269476, par exemple, des techniques reposant sur l'utilisation de hautes pressions, permettant de détacher la carapace d'un homard, d'une crevette, ou d'un crabe de sa chair.

Selon ces techniques de décorticage de crustacés connues, après une rapide mise sous pression, le crustacé est maintenu à une pression de 2000 et 7000 bars pendant une durée de 15 à 120 secondes, suffisante pour détacher la carapace de la chair, puis la pression est relâchée rapidement.

Ces techniques de décorticage de crustacés connues restent donc assez longues à mettre en oeuvre.

On a également envisagé de stériliser des fruits de mer contaminés, et par exemple des huitres contaminées par des bactéries du genre Vibrio, en utilisant des hautes pressions hydrostatiques. Cette technique spécifique, dite de pascalisation, repose sur un protocole particulier qui nécessite, pour être efficace, d'exposer l'huitre contaminée préférentiellement à des pressions de l'ordre de 3500 bars pendant une durée d'au moins cinq minutes. Il a par ailleurs été constaté que l'effet de pascalisation est accru, si l'huitre est à température ambiante.

Cette technique de stérilisation présente en premier lieu l'inconvénient que, au moins dans certaines conditions, la pascalisation d'une huitre altère ses qualités organoleptiques, ce qui n'est pas satisfaisant.

En second lieu, un autre inconvénient est que les huitres obtenues par cette technique ne sont a priori pas conformes, en termes de sécurité alimentaire, aux critères de la réglementation européenne CE 258/97 dite sur les nouveaux aliments, et qu'elles ne sont donc pas commercialisables, au moins en Europe.

Enfin, cette technique de stérilisation n'est bien évidemment pas destinée au traitement des huitres saines.

On observe cependant que la chair des fruits de mer transformés par les techniques connues d'ouverture de coquillage, de décorticage de crustacé ou de stérilisation de coquillage utilisant de très hautes pressions hydrostatiques, présente généralement une qualité moindre, notamment au vu de sa texture, et/ou un aspect différent de la chair du fruit de mer non transformé, ce qui n'est pas satisfaisant.

### 3. Objectifs de l'invention

L'invention a donc notamment pour objectif de pallier les inconvénients de l'état de la technique cités ci-dessus.

Plus précisément, l'invention a pour objectif de fournir une technique permettant de faciliter la transformation des fruits de mer et des poissons.

L'invention a également pour objectif une telle technique de transformation qui préserve les propriétés organoleptiques et de texture, mais également l'aspect naturel, du fruit de mer ou du poisson transformé.

Un objectif de l'invention est également de fournir une telle technique de transformation qui soit compétitive en termes de volumes traités.

Un autre objectif de l'invention est de fournir une telle technique de transformation qui soit simple à mettre en oeuvre et peu onéreuse.

Encore un objectif de l'invention est de fournir une telle technique de transformation qui soit fiable, et sans danger pour le consommateur.

### 4. Exposé de l'invention

Ces objectifs, ainsi que d'autres qui apparaitront par la suite sont atteints à l'aide procédé de transformation d'un crustacé ou d'un coquillage selon la revendication 1 par application d'une pression hydrostatique prédéterminée comprise entre 2000 et 4000 bars, préférentiellement comprise entre 2300 et 3200 bars, permettant d'obtenir un crustacé décortiqué ou un coquillage présentant une coquille sensiblement ouverte.

L'invention concerne ainsi le décorticage des crustacés, notamment des homards, des crevettes et des crabes, consistant à détacher la carapace des crustacés des chairs. Elle concerne également l'ouverture de coquillages, notamment du genre bivalve, et par exemple des huitres, des palourdes, des praires, des coques, des clams, des moules, des coquilles saint jacques, des ormeaux ..., préférentiellement vivants et sains, c'est-à-dire exempts de risque sanitaire pour le consommateur.

L'invention offre ainsi de nouveaux débouchés aux produits issus de la pêche et de la conchyliculture.

Selon l'invention, un tel procédé de transformation comprend une étape de dépressurisation contrôlée dans laquelle les durées pour réduire la pression appliquée à 50% et 20% de ladite pression hydrostatique prédéterminée sont d'au moins 20 secondes, respectivement d'au moins 40 secondes.

La demanderesse a en effet constaté de façon surprenante et inattendue qu'en contrôlant la vitesse de dépressurisation, et notamment en prévoyant une vitesse de suffisamment lente et régulière, la texture, la saveur, et l'aspect de la chair du crustacé ou du coquillage ne sont pas altérées, ou tout du moins de façon insignifiante, par l'étape de dépressurisation.

La demanderesse a ainsi découvert qu'une vitesse moyenne de dépressurisation inférieure à 85 bars par seconde, préférentiellement inférieure à 50 bars par seconde, préserve l'intégrité du tissu cellulaire et des biomolécules de la chair du crustacé ou du coquillage.

Selon l'invention, lors de ladite étape de dépressurisation contrôlée la pression appliquée est relâchée sensiblement instantanément lorsque qu'elle atteint un seuil prédéfini compris entre 300 et 700 bars.

Ainsi, on limite la durée de dépressurisation, typiquement de 20 à 40% par rapport à une décroissance régulière.

Dans un mode de réalisation particulier de l'invention, la durée totale de ladite étape de dépressurisation est comprise entre 65 et 120 secondes.

Selon un aspect avantageux de l'invention, lors de ladite dépressurisation ladite pression décroit sensiblement régulièrement jusqu'à 20% de ladite pression hydrostatique prédéterminée.

Il peut par exemple s'agir d'une décroissance linéaire, en puissance ou logarithmique.

Selon un mode de réalisation particulier de l'invention, un procédé de transformation de crustacé ou de coquillage tel que l'un de ceux décrits ci-dessus comprend une étape exposition dudit coquillage à au moins une sollicitation thermique et/ou osmotique, de façon à obtenir un crustacé ou un coquillage pré-conditionné, précédant l'application audit crustacé ou audit coquillage de ladite pression prédéterminée, comprise entre 2300 et 3200 bars, pendant une durée comprise entre 10 et 50 secondes, de sorte à obtenir un crustacé décortiqué ou un coquillage présentant une coquille sensiblement ouverte.

Ainsi, de façon inédite, l'invention propose de pré-conditionner des crustacés ou des coquillages, avant de les exposer à de hautes pressions, de façon à accélérer le décorticage ou, respectivement, l'ouverture de la coquille.

Il convient de noter que l'expression "sensiblement ouverte" signifie, dans le cadre de l'invention, que la coquille se présente aussi bien ouverte seulement partiellement, qu'en deux demi-coquilles détachées l'une de l'autre.

Par ailleurs, une gamme de pression comprise entre 2300 et 3200 bars permet avantageusement de conserver les qualités organoleptiques du coquillage sensiblement intactes, ce qui est appréciable pour la commercialisation des coquillages transformés.

On notera que le cycle de traitement d'un lot de coquillage, qui dure 10 à 50 secondes, est écourté par rapport aux techniques connues d'ouverture de coquillages par hautes pressions, ce qui permet de transformer journellement une plus grande quantité de coquillage avec une même unité de pressage. En d'autres termes, on réduit les coûts de transformation des coquillages.

Dans au moins un mode de réalisation particulièrement avantageux de l'invention, ladite étape d'exposition comprend une étape de mise en température dudit crustacé ou dudit coquillage à une température de pré-conditionnement comprise entre 5°C et 15°C.

Il a en effet été constaté par l'inventeur, de façon inattendue, que le refroidissement des coquillages au-dessous de la température ambiante, par exemple en les plaçant quelques minutes dans un réfrigérateur ou un congélateur, favorise l'ouverture de la coquille de ces coquillages, lorsqu'on les soumet ensuite à de hautes pressions. La mise en température peut également être réalisée à l'aide d'un équipement de refroidissement ultra-rapide, destiné habituellement par exemple à la surgélation.

Avantageusement, ladite température de pré-conditionnement est égale à 6°C.

Préférentiellement, ladite température de pré-conditionnement est égale à 12°C.

Selon un aspect particulier de l'invention, ladite étape de mise en température comprend une étape d'immersion dudit crustacé ou dudit coquillage dans un bain d'eau de mer présentant une température sensiblement inférieure à ladite température de pré-conditionnement.

Ainsi, on amène d'une façon particulièrement simple les crustacés ou les coquillages à une température de pré-conditionnement convenable, tout en conservant inchangées la chair du crustacé ou du coquillage et l'eau contenue à l'intérieur de la carapace ou de la coquille, sur le plan quantitatif et qualitatif.

Dans au moins un mode de réalisation particulier de l'invention, ladite étape d'exposition comprend une étape d'immersion dudit coquillage dans une saumure présentant une concentration en sel supérieure à 38g/l, et formant ladite sollicitation osmotique.

En effet, une telle sollicitation osmotique favorise, de façon surprenante, l'ouverture de la coquille, comme l'a constaté l'inventeur.

Dans d'autres modes de réalisation de l'invention, il peut également être envisagé d'exposer le coquillage à une sollicitation mécanique, et par exemple à des ondes ultra-sonores, à un rayonnement électro-magnétique et/ou à une sollicitation physico-chimique.

Selon un mode de réalisation avantageux de l'invention, lors de ladite étape d'application, ladite pression prédéterminée est sensiblement égale à 2700 bars et ladite durée d'application est alors comprise entre 35 et 45 secondes.

De façon avantageuse, lors de ladite étape d'application, ladite pression prédéterminée est appliquée audit crustacé ou audit coquillage par l'intermédiaire d'un liquide dont la température est contrôlée.

Dans au moins un mode de réalisation particulier de l'invention, un tel procédé de transformation de coquillage comprend une étape d'introduction dudit crustacé ou dudit coquillage pré-conditionné en vrac dans un sac contenant de l'eau de mer micro-filtrée, précédant ladite étape d'application d'une pression prédéterminée.

Ainsi, on ne dénature pas la chair du crustacé ou du coquillage, et en particulier on évite que la chair prenne un goût de chlore.

Par ailleurs, la qualité de l'eau de la coquille n'est donc pas modifiée lors de l'ouverture d'un coquillage, ce qui est appréciable notamment pour la transformation des huitres.

Un système pour la mise en oeuvre du procédé selon l'invention comprendrait au moins une presse haute pression, préférentiellement à introduction horizontale, comprenant des moyens de contrôle de la vitesse de dépressurisation de l'enceinte de la presse et un circuit de recyclage du liquide de charge.

L'utilisation d'une presse à introduction horizontale est avantageuse car l'introduction et l'extraction des crustacés ou des coquillages sont simplifiées.

D'autre part, le recyclage du liquide de charge est économique et respectueux de l'environnement.

Un tel système comprend en outre un dispositif de régulation de la température dudit liquide de charge et/ou des moyens de pré-conditionnement comprenant au moins un élément appartenant au groupe comprenant au moins :
- groupe de refroidissement;
- cuve de saumurage;

Ainsi, on évite un réchauffement progressif du liquide de charge à chaque nouvelle mise sous pression, susceptible d'inhiber au moins partiellement l'effet du pré-conditionnement du crustacé ou du coquillage.

L'invention concerne également la transformation des poissons crus.

Plus précisément, l'invention vise à permettre d'accélérer des processus industriels mettant en oeuvre des hautes pressions hydrostatiques, ou en d'autres termes des pressions supérieures à 1000 bars, pour détacher la peau et/ou les arêtes des poissons afin d'obtenir des filets, en prévoyant une étape de pré-conditionnement du poisson au moyen d'une sollicitation thermique, osmotique, mécanique, électromagnétique ou physico-chimique.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des dessins annexés parmi lesquels :
- la figure 1A est une représentation synoptique, sous forme de diagramme, des étapes successives d'un exemple de procédé de transformation de homard selon l'invention ;
- les figures 1B et 1C sont des représentations de deux exemples de cycle de variation de pression permettant de transformer un homard selon le procédé présenté en référence à la figure 1A ;
- la figure 1D illustre un mode de réalisation d'un système de transformation d'huitre selon l'invention ;
- la figure 2 est une vue d'une bourrique d'huitres présentées en demi-coquille, transformées à l'aide du système présenté figure 1D ;
- la figure 3 est une représentation synoptique, sous forme de diagramme, des étapes successives d'un procédé de transformation d'huitres selon l'invention incluant une étape de pré-conditionnement.

### 6. Description détaillée de l'invention

### 6.1. Rappel du principe de l'invention

Le principe de l'invention repose donc sur le contrôle de la phase de dépressurisation du crustacé, du coquillage, ou du poisson soumis à l'action de hautes pressions hydrostatiques, afin de préserver ses propriétés qualitatives (texture, goût, ...) et l'aspect de sa chair.

Selon un aspect secondaire de l'invention, il est avantageusement prévu une étape préalable de pré-conditionnement permettant d'accélérer l'ouverture industrielle du coquillage, ou le décorticage du crustacé.

L'invention permet ainsi de fournir aux consommateurs, aux restaurateurs et/ou aux industriels du secteur agroalimentaire, de la chair de crustacé intacte, ou en d'autres termes non altérée par un décorticage sous haute pression hydrostatique.

Elle permet également d'offrir un coquillage transformé dont la coquille est ouverte, par exemple en demi-coquille, et dont le corps comestible présente un aspect et des qualités organoleptiques et nutritionnelles convenables.

### 6.2. Exemples de mode de réalisation de l'invention

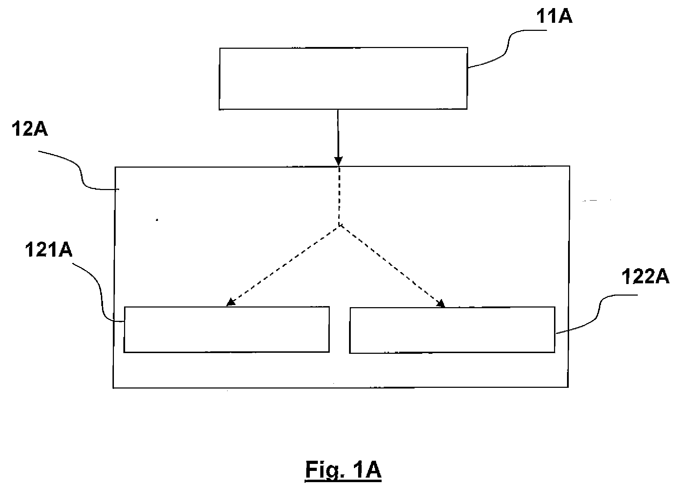

On a représenté sur la figure 1A les étapes d'un procédé de transformation de homard selon l'invention, sous forme de diagramme synoptique.

Dans une première étape 11A, on applique une pression hydrostatique prédéterminée égale à 3045 bars au homard pendant 36 secondes de sorte à détacher la carapace de la chair du homard, et obtenir un homard décortiqué.

Dans une étape suivante 12A, on dépressurise progressivement, et de façon régulière, l'enceinte dans laquelle est confiné le homard à une vitesse contrôlée, de sorte à atteindre 1520 bars au bout de 20 secondes de dépressurisation et 610 bars au bout de 41 secondes de dépressurisation.

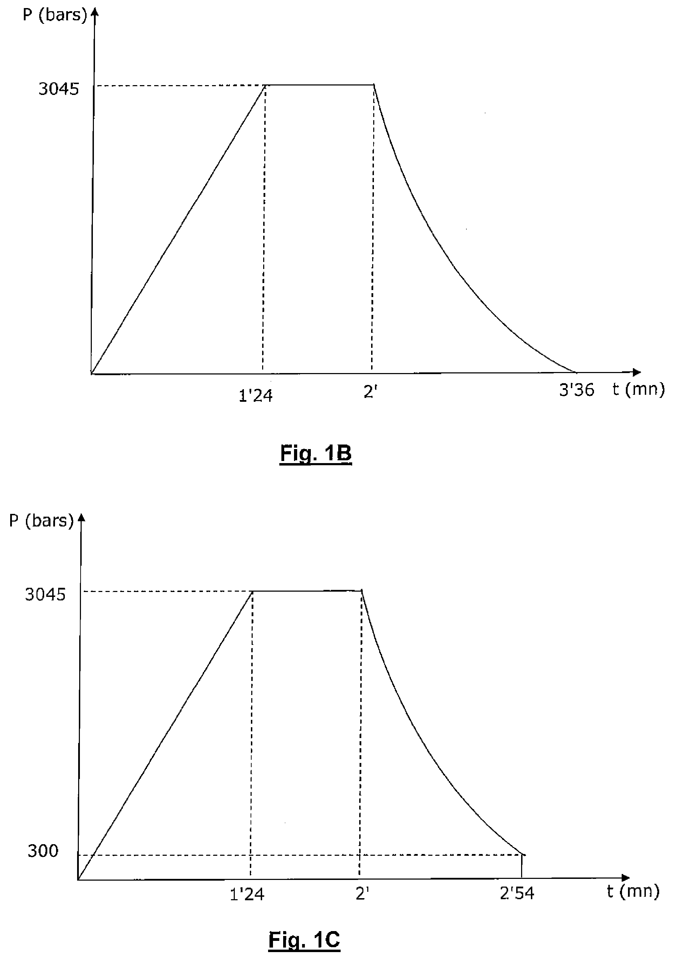

Dans une étape 121A, conforme au graphe représenté sur la figure 1B, on poursuit la dépressurisation régulière de l'enceinte pendant encore 55 secondes.

Dans une variante conforme au graphe représenté sur la figure 1C, on poursuit la dépressurisation pendant 13 secondes jusqu'à atteindre une pression de 300 bars et on évacue de façon quasi-instantanée la pression résiduelle de l'enceinte (étape 122A).

On note sur les figures 1B et 1C que la montée en pression de l'enceinte est sensiblement linéaire et dure 1 minutes 24 secondes.

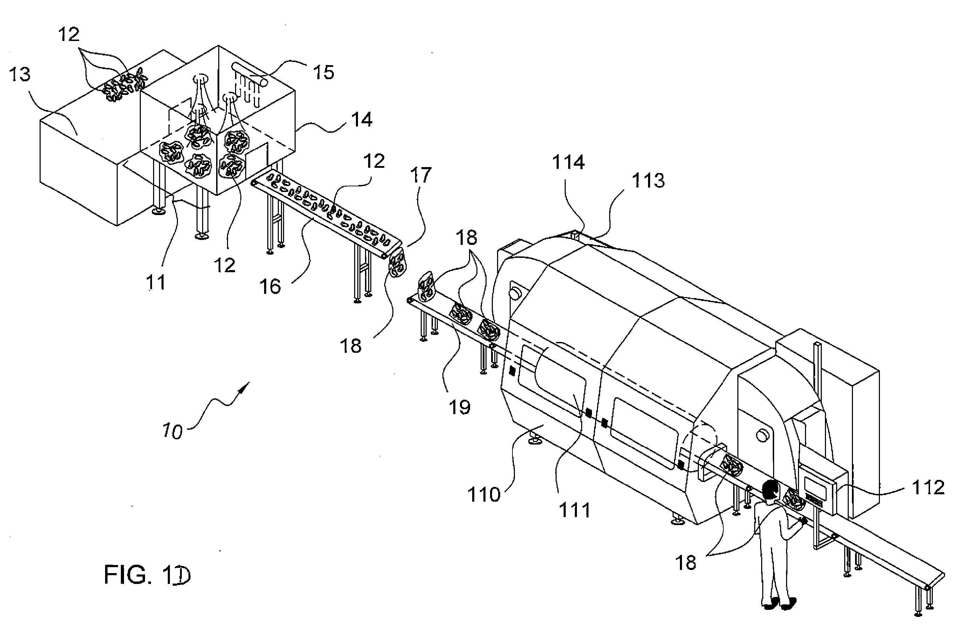

On a illustré sur la figure 1D, un exemple de mode de réalisation d'un système de transformation d'huitre 10 selon la présente invention.

Ce système 10 comprend une unité de pré-conditionnement 11 dans laquelle des huitres 12 réceptionnées au niveau d'une plate-forme de livraison 13 sont conditionnées à une température de 6°C dans une chambre de refroidissement 14, équipée d'un groupe frigorifique 15.

Dans ce mode de réalisation de l'invention, des jets d'air froid sont projetés à partir du plafond de la chambre 14, afin de limiter le dépôt de givre sur la surface des coquilles d'huitre.

Un premier tapis de convoyage 16 permet d'acheminer les huitres pré-conditionnées à partir de la chambre 14, vers un poste d'ensachage 17, où les huitres sont placées en vrac, par lot de 36 spécimens, dans un sac étanche 18. Le sac 18 est ensuite rempli d'eau de mer micro-filtrée, puis scellé hermétiquement.

Dans une variante de ce mode de réalisation, les huitres peuvent être placées dans des paniers.

Un deuxième tapis de convoyage 19 transporte les sacs 18 vers une presse hydrostatique à haute pression 110, adaptée par exemple de la série Wave6000 vendue par la société Nc Hyperbaric.

Cette presse 110 est avantageusement à chargement horizontal, ce qui facilite la mise en place des sacs 18 dans l'enceinte de compression 111 de cette presse, par sa face avant. Dans le même temps les sacs déjà traités sont extraits par la face arrière de l'enceinte.

Dans ce mode de réalisation six sacs sont introduits à chaque fois dans l'enceinte en inox 111, d'une capacité de 135 litres.

Un pupitre de commande 112 permet de contrôler la fermeture de l'enceinte et l'application de la pression.

Après fermeture, l'enceinte 111 est inondée rapidement, à l'aide d'une pompe de remplissage (non représentée sur la figure 1D), d'un liquide de charge, constitué d'eau du réseau filtrée et stockée dans une cuve 113. La pression s'élève rapidement dans la chambre, où elle s'exerce de façon sensiblement isostatique, ou en d'autres termes de façon sensiblement uniforme sur les huitres, et est maintenue pendant 42 secondes, à 2700 bars, dans ce mode de réalisation particulièrement avantageux de l'invention. Il a par ailleurs été prévu de pouvoir ajuster la durée d'application entre 35 et 45 secondes au niveau du pupitre 112 en fonction de la taille des huitres, de façon à s'assurer de l'ouverture complète de leur coquille.

L'étape de pré-conditionnement des huitres à 6°C permet ainsi avantageusement de réduire d'environ 1 à 3 secondes la durée d'application de la pression de 2700 bars par rapport à des huitres restées à température ambiante et introduites directement dans l'enceinte de l'unité de pressage.

La dépressurisation de l'enceinte est avantageusement contrôlée par une unité de commande centralisée (non représentée sur la figure 1D), intégrée à la presse 110, de façon à réduire la pression dans l'enceinte de façon lente et régulière, d'environ 45 bars par seconde en moyenne.

Après dépressurisation, le liquide de charge est évacué par un orifice, avant d'être réinjecté dans la cuve 113 via un circuit de recyclage. Les sacs d'huitres transformées 18 sont évacués de l'enceinte sur un tapis, et l'enceinte est lavée au jet d'eau avant d'y introduire de nouveaux sacs.

On note qu'afin de maintenir la température du liquide de charge constamment à 6°C dans la cuve 113, celle-ci est contrôlée à l'aide d'un dispositif de régulation 114.

Ce dispositif 114 comprend une sonde de température commandant l'arrêt et la marche d'une pompe de circulation d'un liquide de refroidissement dans un échangeur au contact du liquide de charge. Dans une variante de ce mode de réalisation, il peut également être envisagé d'associer un groupe frigorifique à la cuve 113.

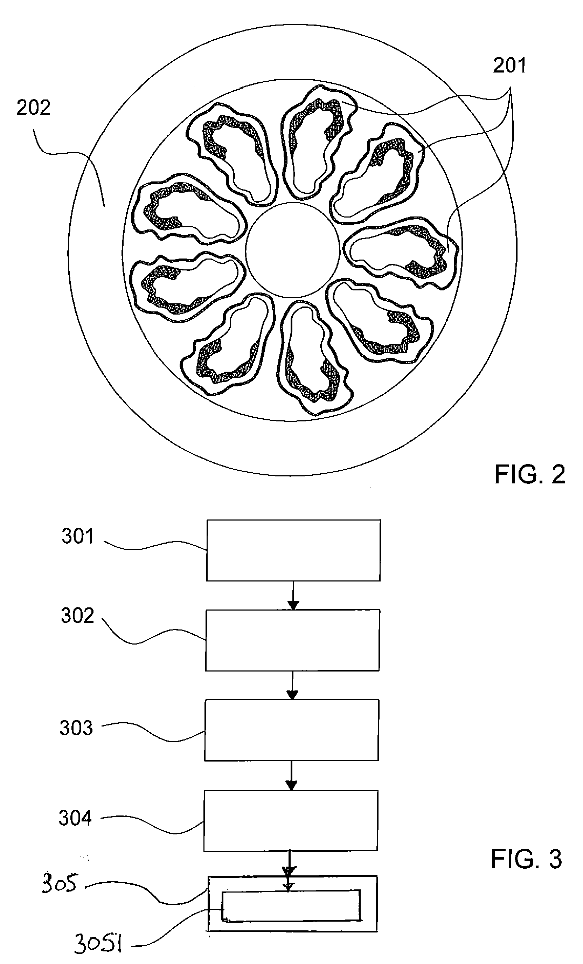

Les huitres ainsi transformées peuvent être conservées dans le sac étanche, en vu d'être livrées à des restaurateurs, ou reconditionnées en demi-coquille 201 dans une bourriche 202, comme on peut le voir sur la figure 2, après avoir ôté les coquilles supérieures qui ne se sont pas complètement détachées.

La figure 3 résume sous forme de diagramme synoptique, les étapes du procédé selon l'invention mis en oeuvre au sein du système de transformation d'huitres présenté en référence à la figure 1D.

Dans une première étape 301, les huitres sont réceptionnées. Elles sont ensuite pré-conditionnées dans une deuxième étape 302 en les exposant à une sollicitation thermique, puis ensachées dans une troisième étape 303.

Dans une étape 304, on applique une pression hydrostatique prédéterminée aux huitres, égale à 2700 bars dans ce mode de réalisation de l'invention, pendant une durée de 35 à 45 secondes, suffisante pour ouvrir la coquille des huitres.

Dans une étape finale 305, on dépressurise l'enceinte de façon régulière de façon à atteindre une valeur de 1350 bars au bout de 27 secondes et de 540 bars au bout de 55 secondes, puis on relâche la pression de l'enceinte de façon quasi-instantanée (étape 3051).

### 6.3. Transformation d'autres coquillages ou crustacés, et des poissons

Il a été constaté par l'inventeur que selon les espèces de crustacés ou de coquillages, ceux-ci doivent préférentiellement être pré-conditionnés à une température comprise entre 5°C et 15°C, afin de réduire la durée d'application d'une haute pression nécessaire pour détacher la carapace de la chair d'un crustacé, ou respectivement pour l'ouverture de la coquille d'un coquillage.

Il apparait également, au vu de tests effectués par l'inventeur, que selon les espèces la durée d'application d'une pression permettant de ne pas endommager et/ou modifier les qualités organoleptiques du crustacé ou du coquillage, s'étend entre 10 et 50 secondes. Les valeurs des pressions garantissant la préservation de la qualité des coquillages sont quant à elle comprises entre 2300 et 3200 bars. Elles sont notamment plus faibles pour des coquillages dont la coquille contient naturellement peu d'eau et/ou dont le pied est moins résistant.

L'étape de pré-conditionnement au moyen d'une sollicitation thermique, osmotique, mécanique, électromagnétique ou physico-chimique proposée par l'invention peut également présenter un avantage pour la préparation des crustacés et des poissons. Elle permet en effet de raccourcir la durée d'application de la haute pression nécessaire pour décortiquer un crustacé ou détacher la peau et/ou les arêtes d'un poisson.

À titre d'exemple, la durée de décorticage de la carapace d'un homard cru peut être réduite d'environ 38 secondes à environ 36 secondes sous 2700 bars de pression, en pré-conditionnant ce homard à une température de 12°C. On notera par ailleurs qu'il est avantageux de percer au préalable la queue du homard à la base de l'éventail, pour laisser pénétrer de l'eau de mer micro-filtrée sous la carapace.

### 6.4. Autres caractéristiques optionnelles et avantages de l'invention

Dans des variantes du mode de réalisation de l'invention détaillé ci-dessus, il peut également être prévu d'immerger les coquillages :
- dans une cuve de saumurage contenant une saumure présentant une concentration en sel supérieure à 38g/l ; et/ou
- dans un bain d'eau de mer présentant une température sensiblement inférieure à la température de pré-conditionnement retenue de façon préférentielle, afin de les mettre en température,
avant de les introduire dans la presse à haute pression.

Dans une autre variante, il peut être envisagé, sans sortir du cadre de l'invention, de sceller la coquille de l'huitre avec une bande thermo-rétractable, par exemple de la société Soretrac (marque déposée), ou une bande adhésive, pour prévenir le dégorgement de l'eau contenu dans la coquille, lorsqu'elle s'ouvre sous l'action de la pression. L'huitre transformée peut être livrée aux professionnels de la restauration avec cette bande, qu'il suffit de retirer pour ouvrir l'huitre.

On rappelle que l'invention s'applique aux crustacés et aux coquillages en général, mais aussi aux poissons.

Les modes de réalisation ici décrits n'ont pas pour but de limiter la portée de l'invention. En conséquence, il pourra y être apporté de nombreuses modifications sans sortir du cadre de celle-ci telle que définie par les revendications.

## Revendications

1. Procédé de transformation d'un crustacé ou d'un coquillage par application d'une pression hydrostatique prédéterminée comprise entre 2000 et 4000 bars, préférentiellement comprise entre 2300 et 3200 bars, permettant d'obtenir un crustacé décortiqué ou un coquillage présentant une coquille sensiblement ouverte, comprenant une étape de dépressurisation contrôlée dans laquelle les durées pour réduire la pression appliquée à 50% et 20% de ladite pression hydrostatique prédéterminée sont d'au moins 20 secondes, respectivement d'au moins 40 secondes, **caractérisé en ce que** lors de ladite étape de dépressurisation contrôlée la pression appliquée est relâchée sensiblement instantanément lorsque qu'elle atteint un seuil prédéfini compris entre 300 et 700 bars.

2. Procédé de transformation d'un crustacé ou d'un coquillage selon la revendication 1, **caractérisé en ce que** la durée totale de ladite étape de dépressurisation est comprise entre 65 et 120 secondes.

3. Procédé de transformation d'un crustacé ou d'un coquillage selon l'une quelconque des revendications 1 et 2, **caractérisé en ce que** lors de ladite dépressurisation ladite pression décroit sensiblement régulièrement jusqu'à 20% de ladite pression hydrostatique prédéterminée.

4. Procédé de transformation d'un crustacé ou d'un coquillage selon l'une quelconque des revendications 1 à 3, **caractérisé en ce qu'**il comprend une étape d'exposition (302) dudit crustacé ou dudit coquillage à au moins une sollicitation thermique et/ou osmotique, de façon à obtenir un crustacé ou un coquillage pré-conditionné, précédant l'application audit crustacé ou audit coquillage de ladite pression prédéterminée, comprise entre 2300 et 3200 bars, pendant une durée comprise entre 10 et 50 secondes, de sorte à obtenir un crustacé décortiqué ou un coquillage présentant une coquille sensiblement ouverte.

5. Procédé de transformation selon la revendication 4, **caractérisé en ce que** ladite étape d'exposition comprend une étape de mise en température dudit coquillage à une température de pré-conditionnement comprise entre 5°C et 15°C, préférentiellement 12°C.

6. Procédé de transformation selon la revendication 5, **caractérisé en ce que** ladite étape de mise en température comprend une étape d'immersion dudit crustacé ou dudit coquillage dans un bain d'eau de mer présentant une température sensiblement inférieure à ladite température de pré-conditionnement.

7. Procédé de transformation selon l'une quelconque des revendications 4 à 6, **caractérisé en ce que** ladite étape d'exposition comprend une étape d'immersion dudit coquillage dans une saumure présentant une concentration en sel supérieure à 38g/l, et formant ladite sollicitation osmotique.

8. Procédé de transformation selon l'une quelconque des revendications 4 à 7, **caractérisé en ce que**, lors de ladite étape d'application, ladite pression prédéterminée est sensiblement égale à 2700 bars et ladite durée d'application est comprise entre 35 et 45 secondes.

9. Procédé de transformation selon l'une quelconque des revendications 1 à 8, **caractérisé en ce que** ladite pression prédéterminée est appliquée audit crustacé ou audit coquillage par l'intermédiaire d'un liquide dont la température est contrôlée.

10. Procédé de transformation selon l'une quelconque des revendications 1 à 9, **caractérisé en ce qu'**il comprend une étape d'introduction dudit crustacé ou dudit coquillage pré-conditionné en vrac dans un sac contenant de l'eau de mer microfiltrée, précédant ladite étape d'application d'une pression prédéterminée.

## Patentansprüche

1. Verfahren zur Verarbeitung eines Krustentiers oder einer Muschel durch Aufbringen eines vorbestimmten hydrostatischen Drucks, der zwischen 2000 und 4000 bar, vorzugsweise zwischen 2300 und 3200 bar beträgt, das es ermöglicht, ein geschältes Krustentier oder eine Muschel zu erhalten, die eine im Wesentlichen offenen Schale aufweist, umfassend einen Schritt des kontrollierten Druckablassens, wobei die Zeiten zum Reduzieren des aufgebrachten Drucks auf 50 % und 20 % des vorbestimmten hydrostatischen Drucks mindestens 20 Sekunden beziehungsweise mindestens 40 Sekunden betragen, **dadurch gekennzeichnet, dass** der aufgebrachte Druck während des Schritt des kontrollierten Druckablassens im Wesentlichen sofort abgebaut wird, wenn er einen vorbestimmten Schwellenwert erreicht, der zwischen 300 und 700 bar beträgt.

2. Verfahren zur Verarbeitung eines Krustentiers oder einer Muschel nach Anspruch 1, **dadurch gekennzeichnet, dass** die Gesamtdauer des Schrittes des Druckablassens zwischen 65 und 120 Sekunden beträgt.

3. Verfahren zur Verarbeitung eines Krustentiers oder einer Muschel nach einem der Ansprüche 1 und 2, **dadurch gekennzeichnet, dass** während des Druckablassens der Druck im Wesentlichen gleichmäßig auf bis zu 20 % des vorbestimmten hydrostatischen Drucks abnimmt.

4. Verfahren zur Verarbeitung eines Krustentiers oder einer Muschel nach einem der Ansprüche 1 bis 3, **dadurch gekennzeichnet, dass** es einen Schritt des Aussetzens (302) des Krustentiers oder der Muschel einer thermischen und/oder osmotischen Beanspruchung derart aufweist, um ein vorpräparierte Kurstentier oder eine vorpräparierte Muschel zu erhalten, der dem Aufbringen auf das Krustentier oder die Muschel des vorbestimmten Drucks, der zwischen 2300 und 3200 bar beträgt, während einer Dauer, die zwischen 10 und 50 Sekunden beträgt, derart vorausgeht, um ein geschältes Krustentier oder eine Muschel, die eine im Wesentlichen offenen Schale aufweist, zu erhalten.

5. Verfahren zur Verarbeitung nach Anspruch 4, **dadurch gekennzeichnet, dass** der Schritt des Aussetzens einen Schritt des Temperierens der Muschel auf eine Temperatur des Vorpräparierens aufweist, die zwischen 5 °C und 15 °C, vorzugsweise 12 °C beträgt.

6. Verfahren zur Verarbeitung nach Anspruch 5, **dadurch gekennzeichnet, dass** der Schritt des Temperierens einen Schritt des Eintauchens des Krustentiers oder der Muschel in ein Meerwasserbad aufweist, das eine Temperatur aufweist, die im Wesentlichen niedriger als die Temperatur des Vorpräparierens ist.

7. Verfahren zur Verarbeitung nach einem der Ansprüche 4 bis 6, **dadurch gekennzeichnet, dass** der Schritt des Aussetzens einen Schritt des Eintauchens der Muschel in eine Salzlösung, die eine Salzkonzentration von mehr als 38 g/l aufweist, aufweist und die osmotische Beanspruchung bildet.

8. Verfahren zur Verarbeitung nach einem der Ansprüche 4 bis 7, **dadurch gekennzeichnet, dass** während des Schrittes des Aufbringens der vorbestimmte Druck im Wesentlichen gleich 2700 bar beträgt und die Dauer des Aufbringens zwischen 35 und 45 Sekunden beträgt.

9. Verfahren zur Verarbeitung nach einem der Ansprüche 1 bis 8, **dadurch gekennzeichnet, dass** der vorbestimmte Druck auf das Krustentier oder die Muschel über eine Flüssigkeit aufgebracht wird, deren Temperatur kontrolliert wird.

10. Verfahren zur Verarbeitung nach einem der Ansprüche 1 bis 9, **dadurch gekennzeichnet, dass** es einen Schritt des Einführens des Krustentiers oder der vorpräparierten Muschel in loser Schüttung in einen Beutel, der mikrofiltriertes Meerwasser enthält, aufweist, der dem Schritt des Aufbringens eines vorbestimmten Drucks vorausgeht.

## Claims

1. The method of processing a crustacean or shellfish by applying a predetermined hydrostatic pressure ranging between 2000 and 4000 bars, preferably ranging between 2300 and 3200 bars, to obtain a shelled crustacean or shellfish having a substantially open shell, comprising a step of controlled depressurisation during which the durations to reduce the pressure applied to 50% and 20% of said predetermined hydrostatic pressure are of at least 20 seconds, respectively of at least 40 seconds, **characterised in that** during said step of controlled depressurisation the pressure applied is released substantially instantly when it reaches a preset threshold ranging between 300 and 700 bars.

2. The method of processing a crustacean or a shellfish according to claim 1, **characterised in that** the total duration of said step of depressurisation ranges between 65 and 120 seconds.

3. The method of processing a crustacean or a shellfish according to any of claims 1 and 2, **characterised in that** during said depressurisation said pressure decreases substantially regularly to 20% of said predetermined hydrostatic pressure.

4. The method of processing a crustacean or a shellfish according to any of claims 1 to 3, **characterised in that** it comprises a step of exposing (302) said crustacean or said shellfish to at least one thermal and/or osmotic stress, so as to obtain a pre-conditioned crustacean or shellfish, preceding the application to said crustacean or to said shellfish said predetermined pressure, ranging between 2300 and 3200 bars, for a duration ranging between 10 and 50 seconds, so as to obtain a shelled crustacean or a shellfish having a substantially open shell.

5. The method of processing according to claim 4, **characterised in that** the exposition step comprises a step of heating said shell to a pre-conditioning temperature ranging between 5°C and 15°C, preferably 12°C.

6. The method of processing according to claim 5, **characterised in that** said heating step comprises a step of immersing said crustacean or said shellfish in a seawater bath with a temperature substantially lower than said pre-conditioning temperature.

7. The method of processing according to any one of claims 4 to 6 **characterised in that** said exposing step comprises a step of immersing said shellfish into a brine with a salt concentration above 38 g/l, and forming said osmotic stress.

8. The method of processing according to any one of claims 4 to 7 **characterised in that** during said application step, said predetermined pressure is substantially equal to 2700 bars and said duration of application ranges between 35 and 45 seconds.

9. The method of processing according to any one of claims 1 to 8 **characterised in that** said predetermined pressure is applied to said crustacean or to said shellfish via a liquid whose temperature is controlled.

10. The method of processing according to any one of claims 1 to 9 **characterised in that** it comprises a step of inserting said pre-conditioned crustacean or said shellfish in bulk into a bag containing microfiltered seawater, prior to said step of applying a predetermined pressure.
